(19) **Europäisches Patentamt**
**European Patent Office**
**Office européen des brevets**

(11) **EP 2 507 315 B1**

(12) **EUROPEAN PATENT SPECIFICATION**

(45) Date of publication and mention
of the grant of the patent:
**26.02.2014  Bulletin 2014/09**

(21) Application number: **10781795.9**

(22) Date of filing: **19.11.2010**

(51) Int Cl.:
*C08L 23/08* (2006.01)     *C08K 3/00* (2006.01)

(86) International application number:
**PCT/US2010/057319**

(87) International publication number:
**WO 2011/066177 (03.06.2011 Gazette 2011/22)**

(54) **THERMOFORMABLE SOUND-DEADENING FILLED THERMOPLASTIC POLYOLEFIN COMPOSITION**

WÄRMEFORMBARE GERÄUSCHUNTERDRÜCKENDE GEFÜLLTE THERMOPLASTISCHE POLYOLEFINZUSAMMENSETZUNG

COMPOSITION DE POLYOLÉFINE THERMOPLASTIQUE THERMOFORMABLE CHARGÉE AVEC UN MATÉRIAU INSONORISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2009  US 265096 P**

(43) Date of publication of application:
**10.10.2012  Bulletin 2012/41**

(73) Proprietors:
• **Dow Global Technologies LLC**
**Midland, MI 48674 (US)**
• **HP Pelzer Holding GmbH**
**58454 Witten (DE)**

(72) Inventors:
• **SELISKAR, James, T.**
**Bay City, MI 48706 (US)**
• **OELBERG, James, D.**
**Saginaw, MI 48603 (US)**
• **OWEIMREEN, Tariq, S.**
**Sterling Heights, MI 48312 (US)**
• **LADEWIG, Jan**
**Rochester Hills, MI 48307 (US)**
• **KARCZ, Thomas**
**44369 Dortmund (DE)**

(74) Representative: **Raynor, John**
**Beck Greener
Fulwood House
12 Fulwood Place
London
WC1V 6HR (GB)**

(56) References cited:
**US-A1- 2006 199 887     US-B1- 6 472 042**

**Description**

FIELD OF THE INVENTION

This invention relates to sound-deadening composites comprising an ethyl vinyl acetate copolymer, one or more linear ethylene polymer and/or substantially linear polymer, and a filler, preferably calcium carbonate. Specifically, a sound-deadening composite having a good balance of melt strength and elongation such that it is particularly suitable for sheet extrusion and subsequent thermoforming into an automotive article.

BACKGROUND OF THE INVENTION

It has long been known that interposing mass between a sound source and the area to be kept quiet is an effective means for attaining sound deadening. A sheet of lead is thin, flexible, often highly effective, but costly. The challenge, then, is to attain dense, thin, flexible sheet which can be interposed between a source of noise and the area to be quieted.

Sheets of thermoplastics or of rubber-like materials have long been used as sound-deadening means. To make the sheets flexible, dense, strong, and inexpensive has posed a challenge to compounders for many years. For some uses, such as automobile carpet underlayment, it is desirable that the sound-deadening sheet is also formable.

Sound-deadening sheets made from composites of filled thermoplastic compositions are well known for use in such automotive applications. The thermoplastic compositions typically comprise one or more polymer, a filler, and optionally a plasticizer. A number of patents have been granted for such highly filled thermoplastic compositions as represented by USP 4,191,798; 4,222,924; 4,263,196; 4,379,190; 4,403,007; 4,430,468; 4,434,258; 4,438,228; 6,472,042; and 6,787,593. Different systems of polymers and fillers with and without plasticizers have been proposed. For example, the above-mentioned patents disclose the use of ethylene interpolymers such as ethylene/vinyl ester, ethylene/unsaturated mono- or di-carboxylic acids, esters of unsaturated acids, metallocene catalyzed ethylene-alpha olefin interpolymers, etc. Blends of such ethylene interpolymers with other elastomers and polymers have also been proposed.

Notwithstanding the proposal of many different polymer based compositions for use in sound-deadening composites, ethylene vinyl acetate has been widely used on a commercial basis. For sheet or flat applications, such materials demonstrate adequate modulus while meeting a number of balanced properties such as impact strength, tensile, elongation, flex modulus and specific gravity. However, where the sound-deadening composition or composite is used in certain applications, such as flooring applications, where formability is a key requirement, ethyl vinyl acetate based compositions lack sufficient elasticity to form even minimally complex articles. However, conventional ethylene-alpha olefin based compositions or composites comprising plasticizers with adequate elasticity, lack sufficient melt strength to allow thermoforming. It would be desirable to have a composition or composite having both sufficient melt strength and elasticity such that sound-deadening applications with deep draws can be formed by a conventional thermoforming process.

SUMMARY OF THE INVENTION

The filled thermoplastic polyolefin composition of the present invention is such a composition demonstrating good melt strength and elongation capable of deep draws while providing excellent sound-deadening properties. The composition of the present invention is well suited for sheet extrusion and subsequent use in a thermoforming process to make thermoformed articles.

In one embodiment, the filled thermoplastic polyolefin composition of the present invention comprises

(i) an ethylene/vinyl acetate copolymer, preferably comprising at least 18 percent vinyl acetate and preferably present in an amount of from 10 to 15 parts by weight;

(ii) one or more linear ethylene polymer, one or more substantially linear ethylene polymer, or mixtures thereof, and preferably present in an amount of from 5 to 10 parts by weight characterized as having

(ii.a) a density of less than about 0.873 g/cc to 0.885 g/cc and/or
(ii.b) an $I_2$ of from greater than 1 g/10 min to less than 5 g/10 min;

(iii) a filler, preferably calcium carbonate, barium sulfate, or mixtures thereof, and preferably present in an amount of from 65 to 80 parts by weight;
and
(iv) a plasticizer preferably present in an amount of from 3 to 7 parts by weight wherein parts by weight are based on the total weight of the filled thermoplastic polyolefin composition.

In another embodiment of the present invention, the hereinabove disclosed composition in the form of an extruded sheet.

In yet another embodiment, the present invention is process to make a thermoformed article comprising the steps of

(A) extruding a sheet comprising the filled thermoplastic polyolefin composition disclosed hereinabove and

(B) thermoforming said sheet into a thermoformed article, preferably a thermoformed under hood insulation, outer/ inner dash insulation, upper/side cowl insulation, throw mats underlay, carpet underlay, floor damper, door insulation, header insulation, rear seat bottom/strainer, rear quarter/pillar trim, package tray, rear wheelhouse, trunk trim, trunk floor, or pressure sensitive damper.

BRIEF DESCRIPTION OF THE DRAWINGS

FIG 1 is a plot of elongational force versus elongation strain (Hencky strain) at 90°C for Comparative Examples A and B and Examples 1 and 2.
FIG 2 is a plot of elongational viscosity versus time at 120°C for Comparative Examples A and B and Examples 1 and 2.

DETAILED DESCRIPTION OF THE INVENTION

The filled thermoplastic polyolefin composition of the present invention comprises a copolymer of ethylene as component (i). The copolymer of ethylene is a copolymer with at least one comonomer selected from the group consisting of vinyl ester of acetic acids.

In accordance with the above, examples of suitable ethylene copolymers are ethylene vinyl acetate.

The ethylene content of the copolymer is equal to or greater than 60 percent, preferably equal to or greater than 65 percent, more preferably equal to or greater than 70 percent, more preferably equal to or greater than 75 percent, and more preferably equal to or greater than 80 percent. The ethylene content of the copolymer is equal to or less than 95 percent, preferably equal to or less than 90 percent, more preferably equal to or less than 85 percent, and more preferably equal to or less than 82 percent.

The copolymer content of the copolymer is equal to or greater than 5 percent, preferably equal to or greater than 10 percent, more preferably equal to or greater than 15 percent, and more preferably equal to or greater than 18 percent. The copolymer content of the copolymer is equal to or less than 40 percent, preferably equal to or less than 30 percent, and more preferably equal to or less than 25 percent.

A mixture of two or more ethylene copolymers can be used in the filled thermoplastic polyolefin compositions of the present invention in place of a single copolymer as long as the average values for the comonomer content will be within the above indicated range.

Melt index or $I_2$ at 190°C under a load of 2.16 kg of the ethylene copolymer can range from about 0.1 grams per 10 minutes (g/10 min) to about 150 g/10 min, preferably from about 0.1 g/10 min to about 50 g/10 min, more preferably 0.1 g/10 min to 10 g/10 min, and even more preferably of from 0.1 g/10 min to 1 g/10 min.

Physical properties, principally elongation, decline to lower levels when the ethylene copolymer melt index is above about 30. Lower melt index ranges, about 0.5 to 5, are most preferred to maintain strength.

Generally the ethylene copolymer is used in the filled thermoplastic polyolefin composition of the present invention in an amount equal to or greater than about 1 part by weight, preferably equal to or greater than about 2 parts, more preferably equal to or greater than about 5 parts, and even more preferably equal to or greater than about 10 parts by weight based on the total weight of the filled thermoplastic polyolefin composition.

Generally the ethylene copolymer is used in the filled thermoplastic polyolefin composition of the present invention in an amount equal to or less than about 30 parts by weight, preferably equal to or less than about 25 parts, more preferably equal to or less than about 20 parts, and even more preferably equal to or less than about 15 parts by weight based on the total weight of the filled thermoplastic polyolefin composition.

The filled thermoplastic polyolefin composition of the present invention further comprises an elastomeric component, component (ii). A preferred elastomeric component is one or more substantially linear ethylene polymer or one or more linear ethylene polymer (S/LEP), or mixtures thereof. Both substantially linear ethylene polymers and linear ethylene polymers are known. Substantially linear ethylene polymers and their method of preparation are fully described in USP 5,272,236 and USP 5,278,272. Linear ethylene polymers and their method of preparation are fully disclosed in USP 3,645,992; USP 4,937,299; USP 4,701,432; USP 4,937,301; USP 4,935,397; USP 5,055,438; EP 129,368; EP 260,999; and WO 90/07526.

Suitable S/LEP comprises one or more $C_2$ to $C_{20}$ alpha-olefins in polymerized form, having a Tg less than 25°C, preferably less than 0°C, most preferably less than -25°C. Examples of the types of polymers from which the present S/LEP are selected include copolymers of alpha-olefins, such as ethylene and propylene, ethylene and 1-butene, ethylene and 1-hexene or ethylene and 1-octene copolymers, and terpolymers of ethylene, propylene and a diene comonomer such as hexadiene or ethylidene norbornene.

As used here, "a linear ethylene polymer" means a homopolymer of ethylene or a copolymer of ethylene and one or more alpha-olefin comonomers having a linear backbone (i.e. no cross linking), no long-chain branching, a narrow molecular weight distribution and, for alpha-olefin copolymers, a narrow composition distribution. Further, as used here, "a substantially linear ethylene polymer" means a homopolymer of ethylene or a copolymer of ethylene and of one or more alpha-olefin comonomers having a linear backbone, a specific and limited amount of long-chain branching, a narrow molecular weight distribution and, for alpha-olefin copolymers, a narrow composition distribution.

Short-chain branches in a linear copolymer arise from the pendent alkyl group resulting upon polymerization of intentionally added $C_3$ to $C_{20}$ alpha-olefin comonomers. Narrow composition distribution is also sometimes referred to as homogeneous short-chain branching. Narrow composition distribution and homogeneous short-chain branching refer to the fact that the alpha-olefin comonomer is randomly distributed within a given copolymer of ethylene and an alpha-olefin comonomer and virtually all of the copolymer molecules have the same ethylene to comonomer ratio. The narrowness of the composition distribution is indicated by the value of the Composition Distribution Branch Index (CDBI) or sometimes referred to as Short Chain Branch Distribution Index. CDBI is defined as the weight percent of the polymer molecules having a comonomer content within 50 percent of the median molar comonomer content. The CDBI is readily calculated, for example, by employing temperature rising elution fractionation, as described in Wild, Journal of Polymer Science, Polymer Physics Edition, Volume 20, page 441 (1982), or USP 4,798,081. The CDBI for the substantially linear ethylene copolymers and the linear ethylene copolymers in the present invention is greater than about 30 percent, preferably greater than about 50 percent, and more preferably greater than about 90 percent.

Long-chain branches in substantially linear ethylene polymers are polymer branches other than short chain branches. Typically, long chain branches are formed by insitu generation of an oligomeric alpha-olefin via beta-hydride elimination in a growing polymer chain. The resulting species is a relatively high molecular weight vinyl terminated hydrocarbon which upon polymerization yields a large pendent alkyl group. Long-chain branching may be further defined as hydrocarbon branches to a polymer backbone having a chain length greater than n minus 2 ("n-2") carbons, where n is the number of carbons of the largest alpha-olefin comonomer intentionally added to the reactor. Preferred long-chain branches in homopolymers of ethylene or copolymers of ethylene and one or more $C_3$ to $C_{20}$ alpha-olefin comonomers have at least from 20 carbons up to more preferably the number of carbons in the polymer backbone from which the branch is pendant. Long-chain branching may be distinguished using $^{13}C$ nuclear magnetic resonance spectroscopy alone, or with gel permeation chromatography-laser light scattering (GPC-LALS) or a similar analytical technique. Substantially linear ethylene polymers contain at least 0.01 long-chain branches/1000 carbons and preferably 0.05 long-chain branches/1000 carbons. In general, substantially linear ethylene polymers contain less than or equal to 3 long-chain branches/1000 carbons and preferably less than or equal to 1 long-chain branch/1000 carbons.

Preferred substantially linear ethylene polymers are prepared by using metallocene based catalysts capable of readily polymerizing high molecular weight alpha-olefin copolymers under the process conditions. As used here, copolymer means a polymer of two or more intentionally added comonomers, for example, such as might be prepared by polymerizing ethylene with at least one other $C_3$ to $C_{20}$ comonomer. Preferred linear ethylene polymers may be prepared in a similar manner using, for instance, metallocene or vanadium based catalyst under conditions that do not permit polymerization of monomers other than those intentionally added to the reactor. Other basic characteristics of substantially linear ethylene polymers or linear ethylene polymers include a low residuals content (i.e. a low concentration therein of the catalyst used to prepare the polymer, unreacted comonomers and low molecular weight oligomers made during the course of the polymerization), and a controlled molecular architecture which provides good processability even though the molecular weight distribution is narrow relative to conventional olefin polymers.

While the substantially linear ethylene polymers or the linear ethylene polymers used in the practice of this invention include substantially linear ethylene homopolymers or linear ethylene homopolymers, preferably the substantially linear ethylene polymers or the linear ethylene polymers comprise between about 50 to about 95 weight percent ethylene and about 5 to about 50, and preferably about 10 to about 25 weight percent of at least one alpha-olefin comonomer. The comonomer content in the substantially linear ethylene polymers or the linear ethylene polymers is generally calculated based on the amount added to the reactor and as can be measured using infrared spectroscopy according to ASTM D 2238, Method B. Typically, the substantially linear ethylene polymers or the linear ethylene polymers are copolymers of ethylene and one or more $C_3$ to $C_{20}$ alpha-olefins, preferably copolymers of ethylene and one or more $C_3$ to $C_{10}$, alpha-olefin comonomers and more preferably copolymers of ethylene and one or more comonomers selected from the group consisting of propylene, 1-butene, 1-hexene, 4-methyl-1-pentane, and 1-octene. Most preferably the copolymers are ethylene and 1-octene copolymers.

The density of these substantially linear ethylene polymers or linear ethylene polymers is equal to or greater than about 0.873 g/cm³. Generally, the density of these substantially linear ethylene polymers or linear ethylene polymers is less than or equal to about 0.885 g/cm³. The melt flow ratio for substantially linear ethylene polymers, measured as $I_{10}/I_2$, is greater than or equal to about 5.63, is preferably from about 6.5 to about 15, and is more preferably from about 7 to about 10. $I_2$ is measured according to ASTM Designation D 1238 using conditions of 190°C and 2.16 kilogram (kg) mass. $I_{10}$ is measured according to ASTM Designation D 1238 using conditions of 190°C and 10.0 kg mass.

The $M_w/M_n$ for substantially linear ethylene polymers is the weight average molecular weight ($M_w$) divided by number average molecular weight ($M_n$). $M_w$ and $M_n$ are measured by gel permeation chromatography (GPC). For substantially linear ethylene polymers, the $I_{10}/I_2$ ratio indicates the degree of long-chain branching, i.e. the larger the $I_{10}/I_2$ ratio, the more long-chain branching exists in the polymer. In preferred substantially linear ethylene polymers $M_w/M_n$ is related to $I_{10}/I_2$ by the equation:

$$M_w/M_n \leq (I_{10}/I_2) - 4.63.$$

Generally, $M_w/M_n$ for substantially linear ethylene polymers is at least about 1.5 and preferably at least about 2.0 and is less than or equal to about 3.5, more preferably less than or equal to about 3.0. In a most preferred embodiment, substantially linear ethylene polymers are also characterized by a single DSC melting peak.

The preferred $I_2$ melt index for these substantially linear ethylene polymers or linear ethylene polymers is from greater than 1 g/10 min to less than 5 g/10 min.

The preferred $M_w$ for these substantially linear ethylene polymers or linear ethylene polymers is equal to or less than about 180,000, preferably equal to or less than about 160,000, more preferably equal to or less than about 140,000 and most preferably equal to or less than about 120,000. The preferred $M_w$ for these substantially linear ethylene polymers or linear ethylene polymers is equal to or greater than about 40,000, preferably equal to or greater than about 50,000, more preferably equal to or greater than about 60,000, even more preferably equal to or greater than about 70,000, and most preferably equal to or greater than about 80,000.

The substantially linear ethylene polymer and/or linear ethylene polymer is employed in the filled thermoplastic polyolefin composition of the present invention in an amount equal to or greater than about 1 part by weight, preferably equal to or greater than about 3 parts by weight, more preferably equal to or greater than about 5 parts by weight based on the weight of the total composition. In general, the substantially linear ethylene polymer and/or linear ethylene polymer is used in amounts less than or equal to about 20 parts by weight, preferably less than or equal to about 15 parts by weight, more preferably less than or equal to about 10 parts by weight based on the weight of the total composition.

Component (iii) in the thermoplastic polyolefin composition of the present invention is one or more filler. Suitable fillers are calcium carbonate, barium sulfate, fly ash, talc, clay, mica, wollastonite, hollow glass beads, titaninum oxide, silica, carbon black, glass fiber, potassium titanate, cement dust, feldspar, nepheline, glass, fumed silica, alumina, magnesium oxide, zinc oxide, aluminum silicate, calcium silicate, titanium dioxide, titanates, glass microspheres, or chalk. Of these fillers, barium sulfate, talc, calcium carbonate, silica/glass, alumina and titanium dioxide, and mixtures thereof, are preferred; of these, calcium carbonate and barium sulfate are most preferred. See for example USP 6,472,042; 5,091,461; and 3,424,703 and EP 639,613 A1 and EP 391,413, where these materials and their suitability as filler for polymeric resins are generally described. The fillers used in the present invention may or may not be coated, for example with a fatty acid.

Among other properties, the density of the filler(s) selected will influence the filler loading level to obtain optimized sound-deadening performance in the filled thermoplastic polyolefin compositions according to the present invention. Generally, the filler is employed in an amount of at least about 50 part by weight, preferably at least about 60 parts by weight, more preferably at least about 65 parts by weight, even more preferably at least about 70 parts by weight based on the total weight of the composition. Generally, an amount of filler up to and including about 90 parts by weight, preferably up to and including about 85 parts by weight, more preferably up to and including about 80 parts by weight, more preferably up to and including about 77 parts by weight based the total weight of the composition.

Component (iv) of the filled thermoplastic polyolefin composition of the present invention is a plasticizer. The plasticizer ingredient can be selected from one of several groups. The first group is the group known as processing oils. Three types of processing oils are known-paraffinic, aromatic, and naphthenic. None of these are pure; the grades identify the major oil-type present. Aromatic oils tend to "bleed" from the blends of the present invention. Bleeding is normally not desirable, but could be useful in specialty application, for example, in concrete forms where mold release characteristics are valued.

Naphthenic and paraffinic oils are non-bleeding in the formulations of the present invention when used in proper ratios and are thus preferable for uses such as automotive carpet backing.

Processing oils are also subdivided by viscosity range. "Thin" oils can be as low as 100-500 Saybolt Universal Seconds (SUS) at 100° F (38°C). "Heavy" oils can be as high as 6000 SUS at 100°F (38°C). Processing oils, especially naphthenic and paraffinic oils with viscosity of from about 100 to 6000 SUS at 100°F (38°C) are preferred.

The second group of plasticizers that are effective, when used in the practice of the present invention, is the group comprising epoxidized oils such as epoxidized soybean oil and epoxidized linseed oil.

The third group of plasticizers that are effective, when used in the practice of the present invention, are polyester which, in general are liquid condensation products of a polybasic acid and a polyol. The term "liquid" in the context of the present invention is used to mean pourable at room temperature. The acid component is most often a saturated aliphatic dibasic acid, or an aromatic dibasic acid, adipic acid, azelaic acid, phthalic acid, sebacic acid, and glutaric acid, or mixtures of these acids are commonly used. The polyol can be an aliphatic polyol or a poly-oxyalkylene polyol, such as ethylene glycol, propylene glycol, 1,4- and 1,3-butane glycol, diethylene glycol, and polyethylene glycol. Preferred polyester compositions would consist of an acid component of which greater than 50 percent by weight are aliphatic polyol or even more preferably aliphatic glycol. Most preferred compositions are based on adipic or azelaic acid, and propylene glycol or the 1,3- or 1,4- butane glycol. The molecular weight of these plasticizers can vary from a low of a few hundred up to a high of about 10,000. The molecular weight of commercial products is seldom specified; however, typically in the trade, the molecular weight range of the product is classified as low, medium, or high. The preferred range for purposes of this invention is that classified as medium.

Mixtures of polyester or epoxidized oils with hydrocarbon oils are also effective plasticizers if and when used in the present invention. One objective of using such a mixture is to couple the high efficiency of the relatively high cost polyester or epoxidized oil with the low cost of the hydrocarbon oil. The cost/performance of a compound plasticized with such a mixture can be improved significantly for a given application because properties can be tailored more precisely, or filler levels can be increased. Actually certain advantages in the performance of the blends of the present invention are obtained as will be discussed below, when such a mixture is used as the plasticizer.

In general, both the epoxidized oils and the polyesters are more "efficient" than processing oils in plasticizing filled ethylene/alpha-olefin interpolymers; i.e., when used at the same weight percent, they produce blends that are more flexible and have higher percent elongation than the corresponding blends containing processing oil as the plasticizer.

Where a mixture of the polyester plasticizer and a hydrocarbon oil is employed, the relative proportions of the two components can be varied over a wide range depending upon performance objectives. Mixtures containing 50 percent or less of the polyester are preferred for economic reasons, and most preferred are those containing 20 percent or less if the polyester.

A fourth group of plasticizers, polyethers and polyether esters, are also effective plasticizers, if used in blends of the ethylene/alpha-olefin interpolymers and fillers of the present invention. In general, polyethers are oligomers or polymers of alkylene oxides, polymers of ethylene or propylene oxide are the most common types available commercially. Polyethers can be prepared by polymerization of aldehydes using various types of catalysts, or by acid or base catalyzed polymerization of an alkylene oxide, for example. Polyethers can be terminated by hydroxyl groups to form the diol (glycol) or, in the case of adducts of alkylene oxides with glycerol, for example, the triol, and so forth. The hydroxyl terminated polyether can also be reacted with an acid, fatty acids such as lauric and stearic acids are common examples of the compounds are the mono-and diesters of polyethylene or polypropylene glycol. The molecular weight of polyethers may range up to those typical of high polymers.

The plasticizer used in the filled thermoplastic polyolefin compositions of the present invention is present in an amount equal to or greater than about 3 parts by weight, preferably equal to or greater than about 3.5 parts, and more preferably equal to or greater than about 4 parts by weight based on the total weight of the filled thermoplastic polyolefin compositions. The plasticizer used in the filled thermoplastic polyolefin compositions of the present invention is present in an amount equal to or less than about 9 parts by weight, preferably equal to or less than about 7 parts, and more preferably equal to or less than about 6 parts by weight based on the total weight of the filled thermoplastic polyolefin compositions.

The claimed filled thermoplastic polyolefin compositions of the present invention may also optionally contain one or more additives that are commonly used in filled thermoplastic polyolefin compositions of this type. For example a slip agent, preferred slip agents are a saturated fatty acid amide or ethylenebis(amide), an unsaturated fatty acid amide or ethylenebis(amide) or combinations thereof. Other optional additives include, but are not limited to: ignition resistant additives, stabilizers, colorants, pigments, antioxidants, antistats, flow enhancers, mold releases, such as stearic acid, metal stearates (e.g., calcium stearate, magnesium stearate), nucleating agents, including clarifying agents, etc. Preferred examples of additives are ignition resistance additives, such as, but not limited to halogenated hydrocarbons, halogenated carbonate oligomers, halogenated diglycidyl ethers, organophosphorous compounds, fluorinated olefins, antimony oxide and metal salts of aromatic sulfur, or a mixture thereof may be used. Further, compounds which stabilize polymer compositions against degradation caused by, but not limited to heat, light, and oxygen, or a mixture thereof may be used.

If used, such additives may be present in an amount from at least about 0.01 parts, preferably at least about 0.1 parts, more preferably at least about 0.5 parts, more preferably at least about 1 parts, more preferably at least about 2 parts and most preferably at least about 5 parts by weight based on the total weight of the composition. Generally, the additive is present in an amount less than or equal to about 25 parts, preferably less than or equal to about 20 parts, more preferably less than or equal to about 15 parts, more preferably less than or equal to about 12 parts, and most preferably less than or equal to about 10 parts by weight based on the total weight of composition.

Preparation of the filled thermoplastic polyolefin compositions of this invention can be accomplished by any suitable mixing means known in the art, including being prepared in a reactor, powder-powder blending, or preferably dry blending the individual components, and subsequently melt mixing (e.g., using a Banbury mixer, an extruder, roll mill, etc.). The melt blended filled thermoplastic polyolefin of the present invention may be first comminuted to pellets then subsequently extruded to prepare sheet or conveyed directly in a molten state to an extruder to prepare sheet.

The primary use for the compositions of the present invention will probably be in the sheeting area, specifically for use in thermoforming. The process to extrude sheet is well know in the art. Extruded sheet is cut in preparation of the thermoforming process. Sheet dimensions (i.e., length, width, and thickness) and/or weight of the sheet will vary depending on the density of the filled thermoplastic polyolefin composition as well as the intended application which is specific to the thermoformed article to be made therefrom. Any sheet extrusion process which provides sheet with acceptable dimensions and/or weight is acceptable.

Sheet extrusion for the filled thermoplastic polyolefin composition of the present invention is preferably performed at a temperature equal to or less than 180°C, more preferably equal to or less than 160°C, more preferably equal to or less than 150°C, and most preferably equal to or less than 140°C. Sheet extrusion is preferably performed at a temperature equal to or greater than 120°C, more preferably equal to or greater than 125°C, and more preferably equal to or greater than 130°C. A preferred target temperature for sheet extrusion of the filled thermoplastic polyolefin composition of the present invention is 140°C.

Preferably, the cut extruded sheet comprising the filled thermoplastic polyolefin composition of the present invention is utilized in a thermoforming process to manufacture a thermoformed article. The process to thermoform a sheet into a formed article is well known. A sheet may be shaped into an article by positively thermoforming (sometimes referred to as "male" thermoforming) or negatively thermoforming (sometimes referred to as "female" thermoforming).

Thermoforming sheet comprising the filled thermoplastic polyolefin composition of the present invention is preferably performed at a temperature equal to or less than 145°C, more preferably equal to or less than 140°C, more preferably equal to or less than 135°C, and most preferably equal to or less than 130°C. Thermoforming sheet comprising the filled thermoplastic polyolefin composition of the present invention is preferably performed at a temperature equal to or greater than 90°C, more preferably equal to or greater than 95°C, and more preferably equal to or greater than 100°C. A preferred target temperature for thermoforming a sheet comprising the elastomer composition of the present invention is 110°C.

The filled thermoplastic polyolefin compositions of the present invention are useful as molded, especially thermoformed, in automotive articles which provide, among other properties, sound-deadening, dampening, insulation, and/or absorbance. For example, under hood insulation, outer/inner dash insulation, upper/side cowl insulation, throw mats underlay, carpet underlay, floor damper, door insulation, header insulation, rear seat bottom/strainer, rear quarter/pillar trim, package tray, rear wheelhouse, trunk trim, trunk floor, pressure sensitive damper, and the like.

We have identified three useful properties of a filled thermoplastic polyolefin composition which predict how well suited a particular filled thermoplastic polyolefin composition will be for both (1) extruding into sheet and (2) thermoforming said sheet into an article. The three properties are the composition's rheological properties (relative to how well/under what conditions it will extrude), its melt strength (relative to the sag properties of the sheet during the heating step of thermoforming), and its elongation (relative to the ability of the heated sheet to maintain its integrity when formed into articles having deep draws).

TEST METHODS

Rheology of the filled thermoplastic polyolefin compositions of the present invention is used to predict how well the composition will extrude into sheet. The composition's rheology is determined by Rheology by Rubber Process Analyzer (RPA). RPA is an elevated temperature rheology measurement performed on a Rubber Process Analyzer from Alpha Technologies at 150°C. Sample plaques are prepared on a Carver bench top press. Material is placed in a compression chase held the melt at 190°C for 5 minutes at a pressure of $10^7$ Pascal (Pa) and cooled for approximately 4 minutes using a chiller set at 40°F. The specimen's thickness is approximately 2mm. The sample is pressed between very thin MYLAR™ sheets to keep from sticking to the fixture. The rheometer oven is equilibrated at 150°C. The strain is set at 15 percent performing a frequency sweep from 0.1 radians per second (rad/s) to 100 rad/s. The die type is biconical and the die gap is 0.487mm. Complex viscosity is reported as Pascal seconds (Pa*s).

Preferably the filled thermoplastic polyolefin compositions of the present invention have a complex viscosity at 150°C and a shear rate of 100 rad/s equal to or greater than 2000 Pa*s, preferably equal to or greater than 2000 Pa*s, and more preferably equal to or greater than 2100 Pa*s. Preferably the filled thermoplastic polyolefin compositions of the present invention have a complex viscosity at 150°C and a shear rate of 100 rad/s equal to or less than 2475 Pa*s, preferably equal to or less than 2375 Pa*s, and more preferably equal to or less than 2325 Pa*s.

Elongation strain and elongation force is measured by an extensional viscosity fixture (EVF) of TA Instruments (New Castle, DE) attached onto an ARES rheometer of TA Instruments at Hencky strain rates of 0.1 reciprocal second $(s^{-1})$ at 90°C and 120°C. A sample plaque is prepared using a Teflon coated chase on a programmable Tetrahedron bench top press. The program holds the melt at 177°C for 5 minutes at a pressure of $10^7$ Pascal (Pa). The Teflon coated chase is removed to the bench top to allow the plaque to cool. Test specimens are then die-cut from the plaque using a punch press and a handheld die with the dimensions of 10 x 18 square millimeters ($mm^2$, width x length). The specimen's thickness is about 0.7 to 0.9mm.

The rheometer oven that encloses the EVF fixture is set to test temperature of 90°C, or 120°C depending on test temperature for at least 60 minutes prior to zeroing fixtures. The width and the thickness of each film are measured at three different locations of the film and the average values are entered into the test program (TA Orchestrator version 7.2). Densities of the sample at room temperature 1.783 grams per cubic centimeter (g/cc) and at the test temperature 1.4 g/cc are also entered into the test program to allow for the program to calculate the actually dimensions of the film at test temperature. The film specimen is attached onto each of the two drums of the fixture by a pin. The oven is then closed to let temperature equilibrate before starting test. The test is divided into three zones. The first zone is the pre-stretch zone that stretches the film at a very low strain rate of 0.005 $s^{-1}$ for 11 seconds. The purpose of this step is to reduce film buckling introduced when the film is loaded. This is followed by a relaxation zone of 60 seconds to minimize the stress introduced in the pre-stretch step. The third zone is the measurement zone where the film is stretched at the pre-set Hencky strain rate. Strain, elongation force, elongation rate, torque, viscosity, time, and temperature are collected in the third zone and used for analysis.

Elongational viscosity at 120°C at a strain rate of 0.1 $s^{-1}$ is used to determine if the filled thermoplastic polyolefin composition will have enough melt strength when the material is moved from the oven to a deep draw thermoforming tool. Preferably the elongational viscosity at 120°C at a strain rate of 0.1 $s^{-1}$ for the filled thermoplastic polyolefin composition of the present invention is equal to or greater than 200,000 Pa*s at 5 s; preferably equal to or greater than 225,000 Pa*s at 5 s; and more preferably equal to or greater than 250,000 Pa*s at 5 s. Preferably the elongational viscosity at 120°C at a strain rate of 0.1 $s^{-1}$ for the filled thermoplastic polyolefin composition of the present invention is equal to or less than 350,000 Pa*s at 5 s; preferably equal to or less than 325,000 Pa*s at 5 s; and more preferably equal to or less than 300,000 Pa*s at 5 s.

Maximum elongation force from the elongational viscosity at 90°C at a strain rate of 0.1 $s^{-1}$ force versus strain curves of the filled thermoplastic polyolefin compositions of the present invention is used to predict whether the composition will have enough strength to withstand increasing vacuum pressure as the thermoforming tool ports are plugged off while being elastic enough to fully draw down in the deep draw areas without ripping. Preferably, the filled thermoplastic composition of the present invention have a 90°C at a strain rate of 0.1 $s^{-1}$ elongational force equal to or greater than about 30 gram force, preferably equal to or greater than about 31 gram force, and more preferably equal to or greater than about 32 gram force. Preferably, the filled thermoplastic composition of the present invention have a 90°C at a strain rate of 0.1 $s^{-1}$ elongational force equal to or less than about 42 gram force, preferably equal to or less than about 40 gram force, and more preferably equal to or less than 38 gram force.

Hencky elongation strain from the elongational viscosity at 90°C at a strain rate of 0.1 $s^{-1}$ for the filled thermoplastic polyolefin compositions of the present invention is preferably equal to or greater than about 3.86 , preferably equal to or greater than 3.89, and more preferably equal to or greater than 3.92. Preferably, the Hencky elongation strain from the elongational viscosity at 90°C at a strain rate of 0.1 $s^{-1}$ for the filled thermoplastic polyolefin compositions of the present invention is equal to or less than about 4.1, more preferably equal to or less than about 4.07, and more preferably equal to or less than about 4.04.

To illustrate the practice of this invention, examples of preferred embodiments are set forth below. However, these examples do not in any manner restrict the scope of this invention.

EXAMPLES

Comparative Examples A and B and Examples 1 and 2 comprise an EVA, an elastomer, a calcium carbonate, and an oil component. All components are dry blended using the following procedure: the EVA, elastomer(s), and color concentrate are weighed and dry blended together in Container 1. One half of the $CaCO_3$, one half of the oil and all the stearic acid are dry blended into Container 2. The remaining $CaCO_3$ and oil are blended into Container 3. A Kobelco model OM laboratory mixer was used to melt blend the materials and the heaters were set at 98°C. The contents of Container 1 is placed into the Kobelco mixing chamber and run at 75 rpm for approximately three minutes to melt the polymers. The rotation is stopped to add the contents of Container 2, one half of the oil, one half of the $CaCO_3$, and all the stearic acid. The machine is set to 85 rpm and the mixture is blended for another 1.5 minutes. The unit is stopped and the sides of the ram chute are scrapped to remove powder mixture (swept) adhering to the chute. The unit is started back at 85 rpm for another 1.5 minute. The contents of Container 3, second half of the $CaCO_3$ and oil mixture, is then added and run for another two minutes. The unit is swept two more times after additional 1.5 minutes. The total mixing time is to be no more than 15 minutes. The blends continue to mix in the chamber until the melt temperature reaches 180°C and then for two more minutes. If the viscosity of the blend is low where the unit will not reach 180°C, the rpm can be adjusted to apply more shear heat.

The hot blended material is dumped from the mixer and manually placed on top of the rolls on a Kobelco model OP two roll mill. The roll temperature is set at 45°C with actual temperatures at 55°C. As the material exits the rolls it is folded into a size small enough to turn perpendicular to the exit direction and past through the mill again. The same procedure is repeated to make each material passed through the mill three times. This ensures all voids are pressed out of the sheet. The material is allowed to cool.

The samples are compression molded for property evaluation as described hereinabove.

The compositions for Comparative Examples A and B and Examples 1 and 2 are given in Table 1 below in parts by weight based on the weight of the total composition. In Table 1:

"EVA" is an ethylene-vinyl acetate copolymer containing 18 weight percent vinyl acetate available as ELVAX™ 470 from DuPont Company having a density of 0.941 grams per cubic centimeter (g/cc), an $I_2$ of 0.7 g/10 min at 190°C under a load of 2.16 kg;

"SLEP-1" is a substantially linear ethylene-octene copolymer having a density of 0.885 $g/cm^3$ and a MFR of 1 g/10 min at 190°C under a load of 2.16 kg available as ENGAGE™ 8003 Polyolefin Elastomer from the Dow Chemical Company;

"SLEP-2" is a substantially linear ethylene-octene copolymer having a density of 0.870 $g/cm^3$ and a MFR of 5 g/10 min at 190°C under a load of 2.16 kg available as ENGAGE 8200 Polyolefin Elastomer from the Dow Chemical Company;

"SLEP-3" is a substantially linear ethylene-octene copolymer having a density of 0.875 $g/cm^3$ and a MFR of 3 g/10 min at 190°C under a load of 2.16 kg available as ENGAGE 8452 Polyolefin Elastomer from the Dow Chemical Company;

"$CaCO_3$" is an uncoated calcium carbonate available from Carmeuse Natural Chemicals wherein at least 90 percent of the particles are equal to or less than 5 microns in size;

"Oil" is a paraffinic oil available as HYPRENE™ P150BS from Ergon-West Virginia, Inc. having a viscosity at 40°C according to ASTM D 341 of 471 centistokes (cSt) and a specific gravity at 15.6°C of 0.894;

"Stearic acid" is available as Stearic Acid 70% VEG-FGK from ACME Hardesty; and

"Black" color concentrate is available as POLYBLACK™ 46515F from A. Schulman.

Properties for Comparative Examples A and B and Examples 1 and 2 are determined according to the following tests. Results are listed in Table 1:

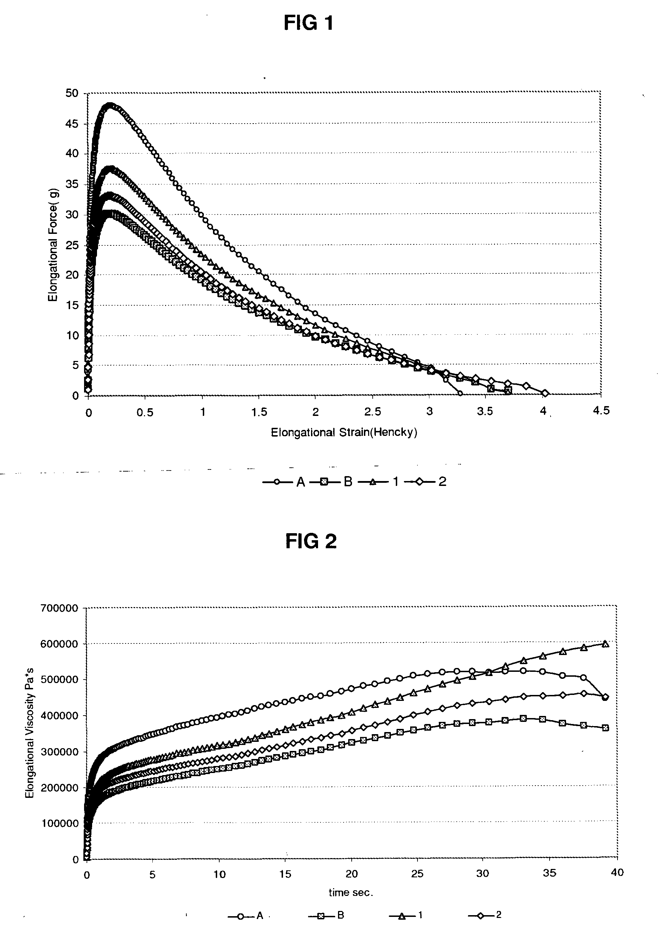

"RPA" rheology is determined by the Rubber Process Analyzer process as described hereinabove and "Hencky strain" and "maximum elongation force" is measured by an extensional viscosity fixture (EVF) as describer hereinabove. FIG 1 is a plot of elongational force versus elongation strain (Hencky strain) at 90°C for Comparative Examples A and B and Examples 1 and 2. FIG 2 is a plot of elongational viscosity versus time at 120°C for Comparative Examples A and B and Examples 1 and 2.

Example 3 comprises the same composition as Example 2 but is scaled up to commercial size. The EVA, ENGAGE 8452 Elastomer, $CaCO_3$, oil, stearic acid, and carbon black color concentrate are dry blended and continuously feed to a Farrel Continuous Mixer (FCM). The mixer is run at 370 rpm with a dump orifice size large enough to allow the material to mix long enough to have all polymers melted and powders dispersed and still run at a rate where the extruder is not starve fed.

The molten material is conveyed to a single screw extruder running at 24 rpm which is temperature controlled at approximately 150°C. The material is extruded through a die and then a calendar roll which has a chiller with a set point of 4°C. The calendar roll presses the material into a finished sheet of a density approximately 1.0 lb/ft$^2$ which resulted in a sheet, after trimming, measuring about 72.5 inches by about 40.5 inches by about 0.12 inches. The sheet thickness is dependent upon the filler loading and therefore the density of the material being made into sheet. For example, if the filler level goes up, the density goes up, and the resulting sheet will be thinner to maintain the 1 lb/ft$^2$ for the appropriate specification.

The resulting sheet is thermoformed into a dash mat. The temperature of the sheet for thermoforming is controlled in an oven where the power output of the elements and the amount of time in the oven are the variables controlled. The sheet is heated the oven to a point, in this application, from 90°C, at the leading edge of the sheet as it exits the oven, to 130°C, the trailing edge of the sheet. The oven is run at 80 percent power for 32 seconds and the sheet is flexible enough to sag when lifted, moved, and stretched slightly over the tooling, but not so much that the material continues to stretch and tear before it is draped over the tooling.

A robot with suction cups moves to the sheet and lifts it off the oven conveyor and moves the sheet over the tooling. The material is stretched and lowered onto the tool. The robot assists with holding the material to the tool until the vacuum is applied and the material is held to the tool pneumatically until the deepest draw section is completed. The vacuum is not throttled back as the part forms so the vacuum pressure increases as the number of ports are blocked off during the thermoforming process. After the part is formed it is removed from the tool.

Table 1

| Comparative Example EXAMPLE | A* | B* | 1 | 2 |
|---|---|---|---|---|
| COMPONENT | | | | |
| EVA | 13.66 | 13.66 | 13.66 | 12.43 |
| SLEP-1 | 7.67 | | 3.83 | |
| SLEP-2 | | 7.67 | 3.83 | |
| SLEP-3 | | | | 8.9 |
| $CaCO_3$ | 73.1 | 73.1 | 73.1 | 73.1 |
| Oil | 4.75 | 4.75. | 4.75 | 4.75 |
| Stearic Acid | 0.54 | 0.54 | 0.54 | 0.54 |
| Black | 0.28 | 0.28 | 0.28 | 0.28 |
| PROPERTIES | | | | |
| RPA viscosity @ 150°C | | | | |
| 0 rad/s, Pa*s | 90852 | 56802 | 71646 | 65561 |
| 1 rad/s, Pa*s | 31425 | 19691 | 26232 | 23423 |
| 10 rad/sec, Pa*s | 10168 | 7130 | 8730 | 8119 |
| 100 rad/s, Pa*s | 2478 | 1984 | 2303 | 2247 |
| Hencky Elongation Strain @ 90 °C, 0.1 $s^{-1}$ strain rate | 3.28 | 3.85 | 3.86 | 4.01 |
| Max Elongation Force, g | 48 | 33 | 30 | 38 |
| *not an example of the present invention | | | | |

**Claims**

1. A filled thermoplastic polyolefin composition comprising

    (i) an ethylene/vinyl acetate copolymer;
    (ii) one or more linear ethylene polymer, one or more substantially linear ethylene polymer, or mixtures thereof characterized as having

        (ii.a) a density of from about 0.873 g/cc to 0.885 g/cc and/or
        (ii.b) an $I_2$ of from greater than 1 g/10 min to less than 5 g/10 min;

    (iii) a filler;
    and
    (iv) a plasticizer.

2. The filled thermoplastic polyolefin composition of Claim 1 wherein

    (i) the ethylene/vinyl acetate copolymer is present in an amount of from 10 to 15 parts by weight;

(ii) the one or more linear ethylene polymer, one or more substantially linear ethylene polymer, or mixtures thereof are present in an amount of from 5 to 10 parts by weight;
(iii) the filler is present in an amount of from 65 to 80 parts by weight;
and
(iv) the plasticizer is present in an amount of from 3 to 7 parts by weight,

wherein parts by weight are based on the total weight of the filled thermoplastic polyolefin composition.

3. The composition of Claim 1 wherein the ethylene/vinyl acetate copolymer comprises at least 18 percent vinyl acetate.

4. The composition of Claim 1 wherein the filler is calcium carbonate, barium sulfate, or mixtures thereof.

5. The composition of Claim 1 in the form of an extruded sheet.

6. A process to make a thermoformed article comprising the steps of

(A) extruding a sheet comprising a filled thermoplastic polyolefin composition comprising

(i) from 10 to 15 parts by weight of an ethylene/vinyl acetate copolymer;
(ii) from 5 to 10 parts by weight of one or more linear ethylene polymer, one or more substantially linear ethylene polymer, or mixtures thereof characterized as having

(ii.a) a density of from about 0.873 g/cc to 0.885 g/cc and/or
(ii.b) an $I_2$ of from greater than 1 g/10 min to less than 5 g/10 min;

(iii) from 65 to 80 parts by weight of a filler;
and
(v) from 3 to 7 parts by weight of a plasticizer;
wherein parts by weight are based on the total weight of the filled thermoplastic polyolefin composition

and
(B) thermoforming said sheet into a thermoformed article.

7. The composition of Claim 1 in the form of thermoformed article.

8. The composition of Claim 1 in the form of thermoformed under hood insulation, outer/inner dash insulation, upper/side cowl insulation, throw mats underlay, carpet underlay, floor damper, door insulation, header insulation, rear seat bottom/strainer, rear quarter/pillar trim, package tray, rear wheelhouse, trunk trim, trunk floor, or pressure sensitive damper.

**Patentansprüche**

1. Eine gefüllte thermoplastische Polyolefinzusammensetzung, die Folgendes beinhaltet

(i) ein Ethylen-/Vinylacetat-Copolymer;
(ii) ein oder mehrere lineare Ethylenpolymere, ein oder mehrere im Wesentlichen lineare Ethylenpolymere oder Mischungen daraus, gekennzeichnet als Folgendes aufweisend

(ii.a) eine Dichte von etwa 0,873 g/c$^3$ bis 0,885 g/c$^3$ und/oder
(ii.b) einen $I_2$ von größer als 1 g/10 min bis weniger als 5 g/10 min;

(iii) einen Füllstoff;
und
(iv) einen Weichmacher.

2. Gefüllte thermoplastische Polyolefinzusammenetzung gemäß Anspruch 1, wobei

(i) das Ethylen-/Vinylacetat-Copolymer in einer Menge von 10 bis 15 Gewichtsteile vorhanden ist;

(ii) das eine oder die mehreren linearen Ethylenpolymere, eine oder mehrere im Wesentlichen lineare Ethylenpolymere oder Mischungen daraus in einer Menge von 5 bis 10 Gewichtsteile vorhanden sind;

(iii) der Füllstoff in einer Menge von 65 bis 80 Gewichtsteile vorhanden ist;

und

(iv) der Weichmacher in einer Menge von 3 bis 7 Gewichtsteile vorhanden ist, wobei Gewichtsteile auf dem Gesamtgewicht der gefüllten thermoplastischen Polyolefinzusammensetzung basieren.

3. Zusammensetzung gemäß Anspruch 1, wobei das Ethylen-/Vinylacetat-Copolymer mindestens 18 Prozent Vinylacetat beinhaltet.

4. Zusammensetzung gemäß Anspruch 1, wobei der Füllstoff Calciumcarbonat, Bariumsulfat oder Mischungen daraus ist.

5. Zusammensetzung gemäß Anspruch 1 in der Form einer extrudierten Schicht.

6. Ein Verfahren zum Fertigen eines thermogeformten Artikels, das die folgenden Schritte beinhaltet

(A) Extrudieren einer Schicht, die eine gefüllte thermoplastische Polyolefinzusammensetzung beinhaltet, die Folgendes beinhaltet

(i) von 10 bis 15 Gewichtsteile eines Ethylen-/Vinylacetat-Copolymers;

(ii) von 5 bis 10 Gewichtsteile von einem oder mehreren linearen Ethylenpolymeren, einem oder mehreren im Wesentlichen linearen Ethylenpolymeren oder Mischungen daraus, gekennzeichnet als Folgendes aufweisend

(ii.a) eine Dichte von etwa 0,873 g/c$^3$ bis 0,885 g/c$^3$ und/oder

(ii.b) einen $I_2$ von größer als 1 g/10 min bis weniger als 5 g/10 min;

(iii) von 65 bis 80 Gewichtsteile eines Füllstoffs;

und

(v) von 3 bis 7 Gewichtsteile eines Weichmachers;

wobei Gewichtsteile auf dem Gesamtgewicht der gefüllten thermoplastischen Polyolefinzusammensetzung basieren

und

(B) Thermoformen der Schicht in einen thermogeformten Artikel.

7. Zusammensetzung gemäß Anspruch 1 in der Form eines thermogeformten Artikels.

8. Zusammensetzung gemäß Anspruch 1 in der Form von thermogeformter Kühlerhaubendämmung, äußerer/innerer Armaturenbrettdämmung, oberer/seitlicher Motorhaubendämmung, Fußmattenunterlage, Teppichunterlage, thermogeformtem Bodendämpfer, thermogeformter Türdämmung, Deckendämmung, thermogeformtem Unterteil/thermogeformter Spannvorrichtung des Rücksitzes, Verkleidung des hinteren Viertels/der Säule, Ablageschale, thermogeformtem hinterem Radkasten, thermogeformter Kofferraumauskleidung, thermogeformtem Kofferraumboden oder druckempfindlichem Dämpfer.

**Revendications**

1. Une composition polyoléfinique thermoplastique chargée comprenant

(i) un copolymère d'acétate de vinyle-éthylène ;

(ii) un polymère d'éthylène linéaire ou plus, un polymère d'éthylène substantiellement linéaire ou plus, ou des mélanges de ceux-ci **caractérisés en ce qu'**ils ont

(ii.a) une masse volumique allant d'environ 0,873 g/c$^3$ à 0,885 g/c$^3$ et/ou

(ii.b) un $I_2$ allant de plus de 1 g/10 min à moins de 5 g/10 min ;

(iii) un matériau de charge ; et
(iv) un plastifiant.

2. La composition polyoléfinique thermoplastique chargée de la revendication 1 dans laquelle

   (i) le copolymère d"acétate de vinyle-éthylène est présent dans une quantité allant de 10 à 15 parties en poids ;
   (ii) cet un polymère d'éthylène linéaire ou plus, cet un polymère d'éthylène substantiellement linéaire ou plus, ou des mélanges de ceux-ci sont présents dans une quantité allant de 5 à 10 parties en poids ;
   (iii) le matériau de charge est présent dans une quantité allant de 65 à 80 parties en poids ; et
   (iv) le plastifiant est présent dans une quantité allant de 3 à 7 parties en poids, où les parties en poids sont rapportées au poids total de la composition polyoléfinique thermoplastique chargée.

3. La composition de la revendication 1 dans laquelle le copolymère d'acétate de vinyle-éthylène comprend au moins 18 pour cent d'acétate de vinyle.

4. La composition de la revendication 1 dans laquelle le matériau de charge est du carbonate de calcium, du sulfate de baryum, ou des mélanges de ceux-ci.

5. La composition de la revendication 1 sous la forme d'une feuille extrudée.

6. Un procédé pour réaliser un article thermoformé comprenant les étapes consistant à

   (A) extruder une feuille comprenant une composition polyoléfinique thermoplastique chargée comprenant

      (i) de 10 à 15 parties en poids d'un copolymère d'acétate de vinyle-éthylène ;
      (ii) de 5 à 10 parties en poids d'un polymère d'éthylène linéaire ou plus, d'un polymère d'éthylène substantiellement linéaire ou plus, ou de mélanges de ceux-ci **caractérisés en ce qu'**ils ont

         (ii.a) une masse volumique allant d'environ 0,873 g/c$^3$ à 0,885 g/c$^3$ et/ou
         (ii.b) un I$_2$ allant de plus de 1 g/10 min à moins de 5 g/10 min ;

      (iii) de 65 à 80 parties en poids d'un matériau de charge ;
      et
      (v) de 3 à 7 parties en poids d'un plastifiant ;
      où les parties en poids sont rapportées au poids total de la composition polyoléfinique thermoplastique chargée

   et
   (B) thermoformer ladite feuille en un article thermoformé.

7. La composition de la revendication 1 sous la forme d'un article thermoformé.

8. La composition de la revendication 1 sous la forme d'isolant de capot, isolant de tableau externe/interne, isolant de tablier supérieur/inférieur, thibaude de tapis, thibaude de moquette, amortisseur pour plancher, isolant de porte, isolant de plafond, fond/tenseur de siège arrière, garniture de custode/colonne de quartier arrière, plage arrière, logement de roue arrière, garniture de coffre, plancher de coffre, ou amortisseur sensible à la pression thermoformés.

## FIG 1

## FIG 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US P4191798 A
- US 4222924 A
- US 4263196 A
- US 4379190 A
- US 4403007 A
- US 4430468 A
- US 4434258 A
- US 4438228 A
- US 6472042 A
- US 6787593 A
- US P5272236 A
- US P5278272 A
- US P3645992 A
- US P4937299 A

- US P4701432 A
- US P4937301 A
- US P4935397 A
- US P5055438 A
- EP 129368 A
- EP 260999 A
- WO 9007526 A
- US P4798081 A
- US P6472042 B
- US 5091461 B
- US 3424703 B
- EP 639613 A1
- EP 391413 A

**Non-patent literature cited in the description**

- **WILD.** *Journal of Polymer Science, Polymer Physics Edition,* 1982, vol. 20, 441